# EUROPEAN PATENT APPLICATION

(11) **EP 4 792 997 A1**
(43) Date of publication of application: **19.08.2026**
(21) Application number: 25218804.0
(22) Date of filing: 26.11.2025
(51) Int. Cl.: B25J 9/16, B25J 15/00, G05B 19/402, B23B 35/00, B23B 39/14, B25J 11/00

(54) **ROBOT-ASSISTED TOOL SYSTEMS AND METHODS**

(30) Priority: 18.02.2025 US 202519055897
(71) Applicant: The Boeing Company, Arlington, VA 22202 (US)
(72) Inventor: MEALY, Tim C., Arlington 22202 (US)
(74) Representative: Morrall, Jonathan Ian McLachlan

(57) **Abstract**

A system and a method include a positioner, such as one or more arms. An end effector is coupled to the positioner. A tool is coupled to the end effector. The tool includes an operative portion coupled to one or more motors. A control unit is configured to automatically control the positioner and the tool. The control unit is configured to automatically move the positioner to automatically secure the tool to a jig, and automatically operate the tool to move the operative portion into a hole of the jig and perform a tooling operation in relation to a surface of a component on which the jig is positioned.

## Description

### FIELD OF THE DISCLOSURE

Examples of the present disclosure generally relate to tool systems and methods, such as can be used during a manufacturing process for an aircraft, and more particularly to robot-assisted power tool systems and methods.

### BACKGROUND OF THE DISCLOSURE

Various tools are used during a manufacturing process of a commercial aircraft. For example, drills are used to form holes within different components (such as outer skins, spars, ribs, stringers, and the like). The formed holes are used to receive fasteners (such as rivets, bolts, screws, and the like), which secure different components together.

Automated drilling systems can be used during a manufacturing process. Conventional automated drilling systems that are used during a manufacturing process of a commercial aircraft often include end effectors. The end effectors can be used to provide clamp-up in relation to components and react drill thrust forces. As such, the end effectors are typically relatively large in order to exert a necessary force for the clamp-up.

Drill jigs are also used during the manufacturing process. The drill jigs typically require individual mechanics to manually pick and place power feed drill motors on the drill jigs. Such manual tasks can be repetitive and occur in spaces with limited access, which can pose ergonomic difficulties.

### SUMMARY OF THE DISCLOSURE

A need exists for an improved tool system and method, such as can be used during a manufacturing process of an aircraft, for example. Further, a need exists for an automated tool system and method that eliminate, minimize, or otherwise reduce ergonomic risks to individual mechanics, as well as reduce a size of an end effector and overall machine.

With those needs in mind, certain examples of the present disclosure provide a system including a positioner. In at least one example, the positioner includes one or more arms. An end effector is coupled to the one or more arms. A tool is coupled to the end effector. The tool includes an operative portion coupled to one or more motors. A control unit is configured to automatically control the one or more arms and the tool. The control unit is configured to automatically move the one or more arms to automatically secure the tool to a jig, and automatically operate the tool to move the operative portion into a hole of the jig and perform a tooling operation in relation to a surface of a component on which the jig is positioned.

In at least one example, the tool is a power feed drill.

The system can also include a platform. The one or more arms are supported on the platform. The system can also include one or more conveyors coupled to the platform.

In at least one example, an imaging device is configured to acquire one or more images of one or more features of the jig. The control unit is configured to receive the one or more images, and automatically move the one or more arms to automatically secure the tool to the jig based on the one or more images. As an example, the one or more features of the jig and/or the component include one or more of the hole, a lock, or other markers.

In at least one example, the tool is configured to secure to a lock of the jig.

In at least one example, the control unit is further configured to automatically position and secure or otherwise attach the jig on the surface of the component.

Certain examples of the present disclosure provide a method including automatically moving, by the control unit, the one or more arms to automatically secure the tool to a jig, and automatically operating, by the control unit, the tool to move the operative portion into a hole of the jig and perform a tooling operation in relation to a surface of a component on which the jig is positioned.

### BRIEF DESCRIPTION OF THE DRAWINGS

Figure 1 illustrates a block diagram of a system, according to an example of the present disclosure.
Figure 2 illustrates a simplified side view of the system operating on a component, according to an example of the present disclosure.
Figure 3 illustrates a perspective view of a tool, according to an example of the present disclosure.
Figure 4 illustrates a perspective view of an operative portion of a tool separated from a lock of a jig.
Figure 5 illustrates a schematic block diagram of a control unit, according to an example of the present disclosure.
Figure 6 illustrates a perspective front view of an aircraft, according to an example of the present disclosure.
Figure 7 illustrates a flow chart of a method, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide systems and methods that combine the use of jigs, such as drill jigs, and tools, such as power feed drills, with robotics to eliminate, minimize, or otherwise reduce ergonomic hazards associated with manually moving and operating power feed drills, while also eliminating, minimizing, or otherwise reducing a need for relatively large end effectors to provide clamp-up. In at least one example, the systems and methods include a relatively small robotic arm, and end effector designed to hold a power feed drill, and a drill jig. An imaging device can be used to orient the power feed drill to the drill jig. The systems and methods utilize one or more locks of the drill jig. As such, drill thrust exerted by the power feed drill is reacted by the drill jig, which thereby allows for a smaller machine and smaller end effector. In this manner, the systems and methods can be used in relatively small areas and tighter spaces.

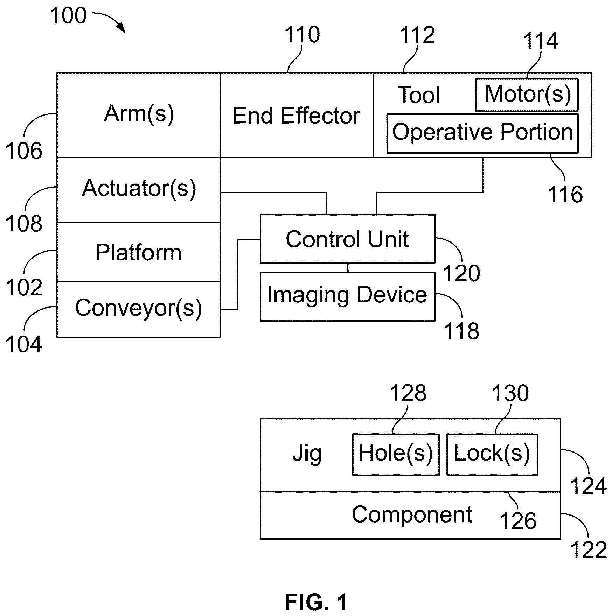

Figure 1 illustrates a block diagram of a system 100, according to an example of the present disclosure. The system 100 includes a platform 102, such as a base having one or more retaining walls, a housing, and/or the like. One or more conveyors 104 extend downwardly from the platform 102. Examples of the conveyors 104 include wheels (such as powered and/or unpowered wheels), casters, a wheeled track, moveable legs, and/or the like. Optionally, the system 100 may not include conveyors 104. For example, the platform 102 can be stationary.

In at least one example, the system 100 is a robotic system having a positioner. In at least one example, the positioner is or otherwise includes one or more arms 106. For example, multiple articulated arms 106 can be coupled together through one more movable joints. One or more actuators 108, such as motors, are operatively coupled to the arm(s) 106. The actuators 108 are configured to automatically move the arm(s) 106. The platform 102 supports the arm(s) 106 and the actuator(s) 108. As another example, the positioner can be or include one or more gantries, one or more flex tracks, one or more tracks, one or more telescoping members, and/or the like.

An end effector 110 is coupled to a distal end of the arm(s) 106. The end effector 110 retains a tool 112. In at least one example, the tool 112 is an automated drill, such as a power feed drill. As another example, the tool 112 can be a cutting tool, such as an automated reciprocating saw. As another example, the tool 112 can be an automated driver, rivet gun, or the like. As another example, the tool 112 can be a laser device configured to form holes through emitted laser energy. As another example, the tool 112 can be an inspection tool, such as a hole probe.

The tool 112 includes one or more motors 114 operatively coupled to an operative portion 116. In at least one example, the tool 112 is a power feed drill, and the operative portion 116 is a drill bit, a countersink bit, or a counterbore bit. In at least one example, the motor(s) 114 are configured to linearly translate the operative portion 116 (such as a drill bit) outwardly from, and inwardly into a housing of the tool 112, as well as rotate the operative portion 116 about a longitudinal axis.

In at least one example, the system 100 also includes an imaging device 118. Example of the imaging device 118 include a photographic and/or video camera, an ultrasonic imaging, an infrared imaging device, a laser imaging device, or the like. Optionally, the system 100 may not include the imaging device.

The system 100 also includes a control unit 120 configured to control operation. The control unit 120 can be supported on and/or within the platform 102 as another example, the control unit 120 can be supported on and/or within the end effector 110. Optionally, the control unit 120 can be remotely located from the platform 102 and the end effector 110.

In at least one example, the system 100 is, or is part of, a robot having the control unit 120. The control unit 120 is in communication with one or more motors of one or more conveyor(s) 104, such as through one or more wired or wireless connections. The control unit 120 is configured to control the conveyor(s) 104 to automatically move the system 100 to desired locations. As noted, optionally, the system 100 may not include the conveyor(s).

The control unit 120 is in communication with the actuator(s) 108, such as through one or more wired or wireless connections. The control unit 120 is configured to operate the actuator(s) 108 to automatically control the arm(s).

The control unit 120 is also in communication with the tool 112, such as through one or more wired or wireless connections. For example, the control unit 120 is configured to control operation of the motor(s) 114 to automatically operate the operative portion 116 of the tool 112.

The control unit 120 is also in communication with the imaging device 118, such as through one or more wired or wireless connections.

The system 100 is configured to operate in relation to a component 122. The component 122 can be a portion of a system being manufactured. For example, the component 122 can be part of a fuselage, wing, internal cabin, and/or the like of an aircraft being manufactured. As a further example, the component 122 can be a panel or other such portion of an outer skin, a rib, a stringer, a spar, a wall, or the like.

A jig 124 is placed on a surface 126 of the component 122. For example, the jig 124 is a drill jig, which is configured to hold a workpiece, such as the component 122, while having holes configured to guide the operative portion 116 of the tool 112 during an operation. The jig 124 includes one or more holes 128 configured to receive a distal end of the operation portion 116 of the tool 112. The jig 124 also includes one or more locks 130, which are configured to secure the tool 112 to the jig 124.

In operation, the jig 124 is placed on the surface 126 of the component 122. As an example, an individual can manually place the jig 124 onto the surface 126.

As another example, the system 100 can automatically place the jig 124 on the surface 126. For example, the tool 112 can be secured to the jig 124 by the lock(s) 130. In particular, a flange of the tool 112 can securely connect to the lock(s) 130. The control unit 120 can then automatically operate the arm(s) 106 to move the jig 124, which is being held by the tool 112, onto the surface 126. The imaging device 118 is used to ensure proper placement of the jig 124 onto the surface 126 of the component 122. For example, the imaging device 118 acquires one or more images of the surface 126 and the jig 124. The acquired images are received by the control unit 120, which locates features of the jig 124, such as the hole(s) 128, the lock(s) 130, and/or other markers (for example, photogrammetry or laser metrology targets) on the jig 124. The control unit 120 then aligns the features of the jig 124 with associated locations of the surface 126 of the component 122 to determine a placement location for the jig 124 on the surface 126. After determining the placement location for the jig 124, the control unit 120 operates the arm(s) 106 (such as via the actuator(s) 108) to position the jig 124 at the placement location on the surface 126 of the component 122.

After the jig 124 is disposed (either manually or automatically) at a desired position on the surface 126 of the component 122, the control unit 120 operates the tool 112 to move the operative portion 116 into the hole(s) 128 to provide a tooling operation. In at least one example, the tool 112 is a power feed drill, and the operative portion 116 is a drill bit, which the control unit 120 automatically operates to move into the hole(s) 128 of the jig 124, and drill holes into the surface 126 of the component 122.

The tool 112, as held by the end effector 110, applies the clamp-up force on the surface 126 of the component 122 through pressure exerted into the jig 124. The end effector 110 holds the tool 112, such as a power feed drill. Additionally, the tool 112 secures the jig 124 in place, such as via the lock(s) 130, on the surface 126 of the component 122. The control unit 120 receives one or more images from the imaging device 118 to control operation of the arm(s) 106 and the tool 112 to position the operative portion 116 in relation to the hole(s) 128 of the jig 124. The tool 112 is secured to the jig 124 by the lock(s) 130. As such, thrust (such as drill thrust) exerted by the operative portion 116 of the tool 112 is controlled and managed by the jig 124, which thereby allows for a smaller end effector 110 and arm(s) 106, thereby allowing the system 100 to be used in smaller confines and tighter spaces as compared to known robotic systems.

As described herein, the system 100 includes the arm(s) 106. The end effector 110 is coupled to the arm(s) 106. The tool 112 is coupled to the end effector 110 (for example, the end effector 110 securely holds the tool 112). The tool 112 includes the operative portion 116 coupled to one or more motors 114. The control unit 120 is configured to automatically control the arm(s) 106 and the tool 112. The control unit 120 is configured to automatically move the arm(s) 106 to automatically secure the tool 112 to the jig 124, and automatically operate the tool 112 to move the operative portion 116 into a hole 128 of the jig 124 and perform a tooling operation in relation to the surface 126 of the component 122 on which the jig 124 is positioned.

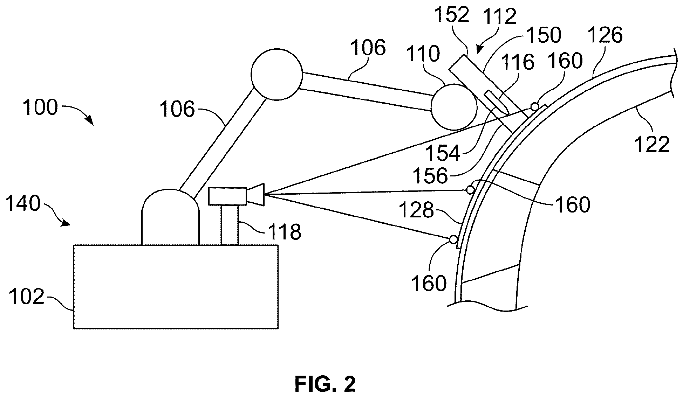

Figure 2 illustrates a simplified side view of the system 100 operating on a component, according to an example of the present disclosure. In at least one example, the system 100 provides a robot 140, which includes the platform 102, arms 106, and the end effector 110 holding the tool 112. In at least one example, the tool 112 is a power feed drill 150 having a housing 152 that retains the motor(s) 114 (shown in Figure 1), and a drill bit 154 operatively coupled to the motor(s) 114 and extending from the housing 152. A flange 156 outwardly extends from the housing 152, and surrounds at least a portion of the drill bit 154. Referring to Figures 1 and 2, the flange 156 is configured to secure to the lock(s) 130 of the jig 124.

The imaging device 118 acquires one or more images of one or more features 160 of the jig 124. The features 160 can be the hole(s) 128, the lock(s) 130, and/or one or more other markers of the jig 124. Examples of the other markers include photogrammetry or laser metrology targets.

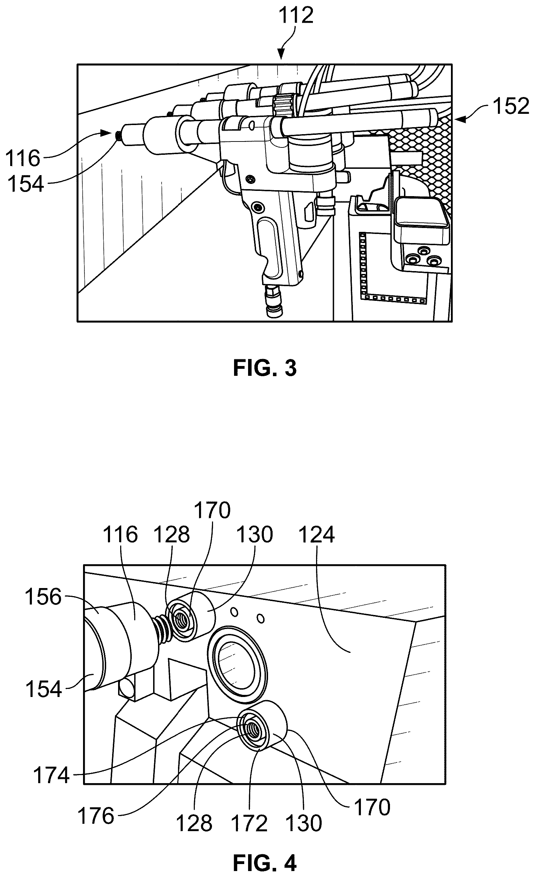

Figure 3 illustrates a perspective view of a tool 112, according to an example of the present disclosure. In at least one example, the tool 112 is a power feed drill 150 having a drill bit 154 as the operative portion 116.

Figure 4 illustrates a perspective view of the operative portion 116 of the tool 112 separated from a lock 130 of the jig 124. Referring to Figures 1-4, in at least one example, the lock 130 surrounds a hole 128. In at least one example, the lock 130 includes a cuff 170 defining a circumferential channel 172, which surrounds an interior tube 174 that defines a central passage 176 that extends to the hole 128. In order to lock the tool 112 to the lock 130, the operative portion 116, such as the drill bit 154 is axially aligned with the central passage 176 and urged therein. The flange 156 extends around the cuff 170. In at least one example, the flange 156 can be rotated, such as a quarter turn, around the cuff 170, such that a portion of the flange 156 (such as an interior tab), is trapped underneath a portion of the cuff 170 (such as a reciprocal tab), thereby securing the tool 112 to the lock 130.

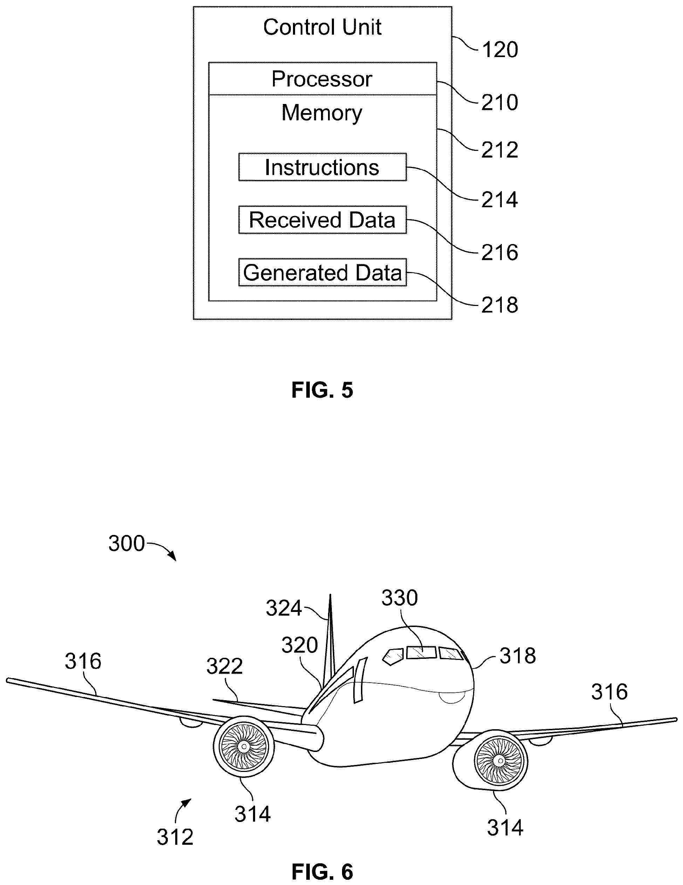

Figure 5 illustrates a schematic block diagram of the control unit 120, according to an example of the present disclosure. In at least one example, the control unit 120 includes at least one processor 210 in communication with a memory 212. The memory 212 stores instructions 214, received data 216, and generated data 218. The control unit 120 shown in Figure 5 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 120 may be or include one or more processors that are configured to control operation, as described herein.

The control unit 120 is configured to execute a set of instructions that are stored in one or more data storage units or elements (such as one or more memories), in order to process data. For example, the control unit 120 may include or be coupled to one or more memories. The data storage units may also store data or other information as desired or needed. The data storage units may be in the form of an information source or a physical memory element within a processing machine.

The set of instructions may include various commands that instruct the control unit 120 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 120. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 120 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 6 illustrates a perspective front view of the aircraft 300, according to an example of the present disclosure. The aircraft 300 includes various components, such as outer skin panels, frames, stringers, and the like, which can be secured together with fasteners. The system 100 (shown in Figures 1-4) is used to operate on various components of the aircraft 300 during a manufacturing process.

The aircraft 300 includes a propulsion system 312 that includes engines 314, for example. Optionally, the propulsion system 312 may include more engines 314 than shown. The engines 314 are carried by wings 316 of the aircraft 300. In other examples, the engines 314 may be carried by a fuselage 318 and/or an empennage 320. The empennage 320 may also support horizontal stabilizers 322 and a vertical stabilizer 324. The fuselage 318 of the aircraft 300 defines an internal cabin 330, which includes a flight deck or cockpit, one or more work sections (for example, galleys, personnel carry-on baggage areas, and the like), one or more passenger sections (for example, first class, business class, and coach sections), one or more lavatories, and/or the like. Figure 6 shows an example of an aircraft 300. It is to be understood that the aircraft 300 can be sized, shaped, and configured differently than shown in Figure 6.

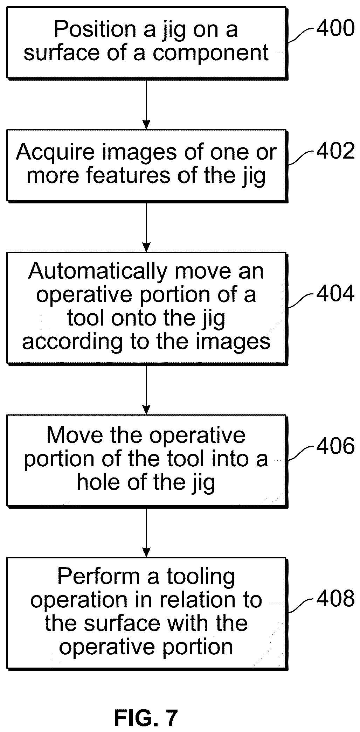

Figure 7 illustrates a flow chart of a method, according to an example of the present disclosure. Referring to Figures 1 and 2, at 400, the jig 124 is positioned on the surface 126 of the component 122. The jig 124 can be manually positioned on the surface 126, or automatically positioned on the surface 126 by the system 100.

At 402, one or more images of one or more features of the jig 124 are acquired by the imaging device 118 At 404, based on the images acquired by the imaging device 118, the control unit 120 automatically moves the operative portion 116 of the tool 112 (via the arm(s) 106) onto the jig 124. At 406, the control unit 120 then operates the tool 112 to move the operative portion 116 of the tool 112 into a hole 128 of the jig 124. At 408, the control unit 120 then operates the tool 112 to perform a tooling operation (such as drilling, cutting, lasering, or the like) in relation to the surface 126 with the operative portion 116.

Further, the disclosure comprises examples according to the following clauses:
Clause 1. A system comprising:
   a positioner;
   an end effector coupled to the positioner;
   a tool coupled to the end effector, wherein the tool comprises an operative portion coupled to one or more motors; and
   a control unit configured to automatically control the positioner and the tool, wherein the control unit is configured to:
      automatically move the positioner to automatically secure the tool to a jig, and
      automatically operate the tool to move the operative portion into a hole of the jig and perform a tooling operation in relation to a surface of a component on which the jig is positioned.
Clause 2. The system of Clause 1, wherein the positioner comprises one or more arms, and wherein the tool is a power feed drill.
Clause 3. The system of Clauses 1 or 2, further comprising a platform, wherein the one or more arms are supported on the platform.
Clause 4. The system of Clause 3, further comprising one or more conveyors coupled to the platform.
Clause 5. The system of any of Clauses 1-4, further comprising an imaging device configured to acquire one or more images of one or more features of the jig.
Clause 6. The system of Clause 5, wherein the control unit is configured to receive the one or more images, and automatically move the positioner to automatically secure the tool to the jig based on the one or more images.
Clause 7. The system of Clauses 5 or 6, wherein the one or more features of the jig comprise one or more of the hole, a lock, or other markers.
Clause 8. The system of any of Clauses 1-7, wherein the tool is configured to secure to a lock of the jig.
Clause 9. The system of any of Clauses 1-8, wherein the control unit is further configured to automatically position the jig on the surface of the component.
Clause 10. A method for a system comprising:
   one or more arms;
   an end effector coupled to the one or more arms;
   a tool coupled to the end effector, wherein the tool comprises an operative portion coupled to one or more motors; and
   a control unit configured to automatically control the one or more arms and the tool,
   the method comprising:
      automatically moving, by the control unit, the one or more arms to automatically secure the tool to a jig, and
      automatically operating, by the control unit, the tool to move the operative portion into a hole of the jig and perform a tooling operation in relation to a surface of a component on which the jig is positioned.
Clause 11. The method of Clause 10, wherein the tool is a power feed drill.
Clause 12. The method of Clauses 10 or 11, further comprising supporting the one or more arms on a platform.
Clause 13. The method of Clause 12, further comprising moving the system by one or more conveyors coupled to the platform.
Clause 14. The method of any of Clauses 10-13, further comprising acquiring, by an imaging device, one or more images of one or more features of the jig.
Clause 15. The method of Clause 14, further comprising receiving, by the control unit, the one or more images, wherein said automatically moving is based on the one or more images.
Clause 16. The method of Clauses 14 or 15, wherein the one or more features of the jig comprise one or more of the hole, a lock, or other markers.
Clause 17. The method of any of Clauses 10-16, further comprising securing the tool to a lock of the jig.
Clause 18. The method of any of Clauses 10-17, further comprising automatically positioning, by the control unit, the jig on the surface of the component.
Clause 19. A system comprising:
   a jig configured to be positioned on a surface of a component, wherein the jig comprises a hole and a lock; and
   a robot comprising:
      one or more arms;
      an end effector coupled to the one or more arms;
      an imaging device configured to acquire one or more images of one or more features of the jig, wherein the one or more features of the jig comprise one or more of the hole, the lock, or other markers;
      a tool coupled to the end effector, wherein the tool comprises an operative portion coupled to one or more motors; and
      a control unit configured to automatically control the one or more arms and the tool, wherein the control unit is configured to:
         receive the one or more images from the imaging device,
         automatically move the one or more arms to automatically secure the tool to the jig based on the one or more images, and
         automatically operate the tool to move the operative portion into the hole of the jig and perform a tooling operation in relation to the surface of the component.
Clause 20. The system of Clause 19, wherein the control unit is further configured to automatically position the jig on the surface of the component.

As described herein, examples of the present disclosure provide improved tool systems and methods, such as can be used during a manufacturing process of an aircraft, for example. Further, examples of the present disclosure provide automated tool systems and methods that eliminate, minimize, or otherwise reduce ergonomic risks to individual mechanics. Also, examples of the present disclosure provide compact systems particularly well-suited for use during a manufacturing process of an aircraft, for example.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a positioner;
an end effector (110) coupled to the positioner;
a tool (112) coupled to the end effector (110), wherein the tool (112) comprises an operative portion (116) coupled to one or more motors (114); and
a control unit (120) configured to automatically control the positioner and the tool (112), wherein the control unit (120) is configured to:
automatically move the positioner to automatically secure the tool (112) to a jig (124), and
automatically operate the tool (112) to move the operative portion (116) into a hole of the jig (124) and perform a tooling operation in relation to a surface (126) of a component (122) on which the jig (124) is positioned.

2. The system (100) of claim 1, wherein the positioner comprises one or more arms (106), and wherein the tool (112) is a power feed drill (150).

3. The system (100) of claim 1 or 2, further comprising a platform (102), wherein the positioner is supported on the platform (102); and optionally
further comprising one or more conveyors (104) coupled to the platform (102).

4. The system (100) of any preceding claim, further comprising an imaging device (118) configured to acquire one or more images of one or more features (160) of the jig (124).

5. The system (100) of claim 4, wherein the control unit (120) is configured to receive the one or more images, and automatically move the positioner to automatically secure the tool (112) to the jig (124) based on the one or more images.

6. The system (100) of claim 4, wherein the one or more features (160) of the jig (124) comprise one or more of the hole, a lock, or other markers.

7. The system (100) of any preceding claim, wherein the tool (112) is configured to secure to a lock of the jig (124); and/or
wherein the control unit (120) is further configured to automatically position the jig (124) on the surface (126) of the component (122).

8. A method for a system (100) comprising:
one or more arms (106);
an end effector (110) coupled to the one or more arms (106);
a tool (112) coupled to the end effector (110), wherein the tool (112) comprises an operative portion (116) coupled to one or more motors (114); and
a control unit (120) configured to automatically control the one or more arms (106) and the tool (112),
the method comprising:
automatically moving, by the control unit (120), the one or more arms (106) to automatically secure the tool (112) to a jig (124), and
automatically operating, by the control unit (120), the tool (112) to move the operative portion (116) into a hole of the jig (124) and perform a tooling operation in relation to a surface (126) of a component (122) on which the jig (124) is positioned.

9. The method of claim 8, wherein the tool (112) is a power feed drill (150).

10. The method of claim 8 or 9, further comprising supporting the one or more arms (106) on a platform (102); and optionally
further comprising moving the system (100) by one or more conveyors (104) coupled to the platform (102).

11. The method of claim 10, further comprising acquiring, by an imaging device (118), one or more images of one or more features (160) of the jig (124); and optionally
receiving, by the control unit (120), the one or more images, wherein said automatically moving is based on the one or more images.

12. The method of claim 11, wherein the one or more features (160) of the jig (124) comprise one or more of the hole, a lock, or other markers.

13. The method of claim 8 to 12, further comprising securing the tool (112) to a lock of the jig (124).

14. The method of claim 8 to 13, further comprising automatically positioning, by the control unit (120), the jig (124) on the surface (126) of the component (122).

15. A system (100) comprising:
a jig (124) configured to be positioned on a surface (126) of a component (122), wherein the jig (124) comprises a hole and a lock; and
a robot (140) comprising:
one or more arms (106);
an end effector (110) coupled to the one or more arms (106);
an imaging device (118) configured to acquire one or more images of one or more features (160) of the jig (124), wherein the one or more features (160) of the jig (124) comprise one or more of the hole, the lock, or other markers;
a tool (112) coupled to the end effector (110), wherein the tool (112) comprises an operative portion (116) coupled to one or more motors (114); and
a control unit (120) configured to automatically control the one or more arms (106) and the tool (112), wherein the control unit (120) is configured to:
receive the one or more images from the imaging device (118),
automatically move the one or more arms (106) to automatically secure the tool (112) to the jig (124) based on the one or more images, and
automatically operate the tool (112) to move the operative portion (116) into the hole of the jig (124) and perform a tooling operation in relation to the surface (126) of the component (122); and optionally
wherein the control unit (120) is further configured to automatically position the jig (124) on the surface (126) of the component (122).
